# EUROPÄISCHE PATENTANMELDUNG

(11) **EP 0 826 917 A2**
(43) Veröffentlichungstag der Anmeldung: **04.03.1998**
(21) Anmeldenummer: 97112186.8
(22) Anmeldetag: 16.07.1997
(51) Int. Cl.: F16P 3/08

(54) **Verfahren und Stillstandswächter zum Überwachen einer Drehstrom-Machine**

(30) Priorität: 03.09.1996 DE 19635701
(71) Anmelder: K.A. SCHMERSAL GmbH & Co., D-42279 Wuppertal (DE)
(72) Erfinder: Heuer, Friedhelm, 32361 Pr. Oldendorf (DE)
(74) Vertreter: Röhl, Wolf Horst, Dipl.-Phys., Dr.

(57) **Zusammenfassung**

Die Erfindung betrifft ein Verfahren und einen Stillstandsswächter zum Überwachen einer vom Stromnetz getrennten, auslaufenden Drehstrom-Maschine (1), wobei die generatorische Spannung der Drehstrom-Maschine (1) einem Stillstandswächter zugeführt und bei Feststellen des Stillstands der Drehstrom-Maschine (1) eine Freischaltung von Freigabeleitungen (F1, ..., F4) für sicherheitsrelevante Geräte vorgenommen wird, wobei in zwei Kanälen jeweils eine Phase der generatorischen Spannung in bezug auf Nulldurchgänge überprüft und bei jedem Auftreten eines Nulldurchgangs ein Signal erzeugt wird, das nach galvanischer Entkopplung zum Steuern der Betätigung von gegeneinander verriegelten Freischalt-Relais der beiden Kanäle über diese freigebende Freischaltsignale verwendet wird.

## Beschreibung

Die Erfindung betrifft ein Verfahren und einen Stillstandswächter zum Überwachen einer Drehstrom-Maschine nach den Oberbegriffen der Ansprüche 1 und 6.

Um Gefährdungen von Personal auszuschließen, sind Maschinen mit sich drehenden oder sich bewegenden Teilen wie Bearbeitungswerkzeugen von Werkzeugmaschinen, Roboterarmen von Roboterfertigungsstraßen, die eine potentielle Gefährdung des Personals bilden, häufig in einem durch Umzäunungen od.dgl. geschützten Raumbereich angeordnet, der über gesicherte Türen od.dgl. zugänglich ist. Die Sicherung solcher Türen oder auch anderer sicherheitsrelevanter Geräte ist derart, daß sie nicht geöffnet bzw. nicht betätigt werden können, solange die Maschine nicht zum Stillstand gekommen ist. Letzteres tritt gewöhnlich erst einige Zeit nach Abschalten der Stromzufuhr ein.

Dieser Maschinenstillstand wird gewöhnlich dadurch überwacht, daß die generatorische Spannung der Maschine mit einem Spannungspegel verglichen wird, bei dessen Unterschreiten vom Maschinenstillstand ausgegangen wird. Dieser Pegel ist einzustellen, wodurch Fehleinstellungen möglich werden, die ein Gefahrenpotential heraufbeschwören.

Aufgabe der Erfindung ist es, ein Verfahren und einen Stillstandswächter nach den Oberbegriffen der Ansprüche 1 und 6 zu schaffen, bei denen keine Fehleinstellungen möglich sind und die somit eine erhöhte Sicherheit bieten.

Diese Aufgabe wird entsprechend den kennzeichnenden Teilen der Ansprüche 1 und 6 gelöst.

Dadurch, daß die Nulldurchgänge der generatorischen Spannung der Drehstrom-Maschine zur Signalerzeugung benutzt werden, um festzustellen, ob der Stillstand der Drehstrom-Maschine eingetreten ist, kann von außen kein Einfluß auf die Stillstandsüberwachung genommen werden. Zumal dies gleichzeitig auch noch genutzt werden kann, um die Stillstandsüberwachung einem Selbsttest zu unterziehen, ergibt sich eine optimale Sicherheit.

Weitere Ausgestaltungen der Erfindung sind der nachfolgenden Beschreibung und den Unteransprüchen zu entnehmen.

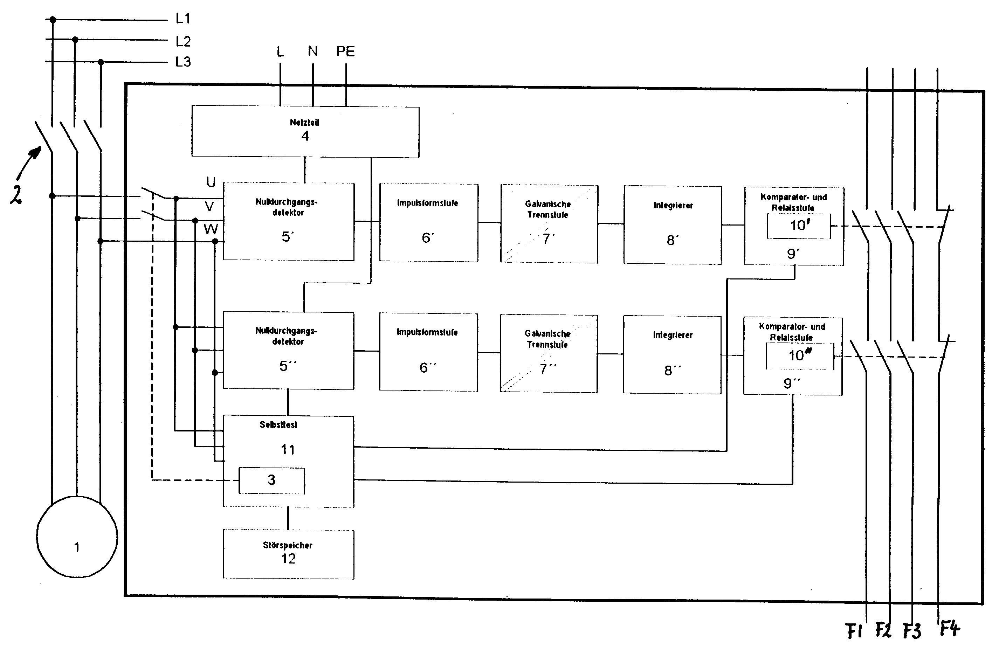

Die Erfindung wird nachstehend anhand eines in der beigefügten Abbildung als Blockschaltbild dargestellten Ausführungsbeispiels näher erläutert.

Der dargestellte Stillstandswächter wird mit zwei bzw. drei Anschlußleitungen L1, L2, L3 einer 1-phasigen bzw. 3-phasigen Synchron- oder Asynchron-Drehstrom-Maschine 1 über Eingänge U, V, W verbunden, d.h. der Stillstandswächter liegt parallel zur Drehstrom-Maschine 1, die über einen Schalter 2 vom Stromnetz trennbar ist, während der Stillstandswächter mit der dann auslaufenden Drehstrom-Maschine 1 verbunden bleibt. Hierbei sind die Eingänge U, V mittels eines Relais 3 zuschaltbar.

Der Stillstandswächter besitzt im dargestellten Ausführungsbeispiel vier Freigabeleitungen F1, ..., F4, von denen drei als Schliesser und eine als Öffner ausgebildet ist. Die Freigabeleitungen F1, ..., F4 sind mit Schutztürriegelungen oder anderen sicherheitsrelevanten Geräten verbunden.

Der Stillstandswächter umfaßt ein mit dem (Wechsel-)Stromnetz verbindbares Netzteil 4, das die für den Betrieb des Stillstandswächters erforderlichen Spannungen erzeugt.

Außerdem enthält das Netzteil 4 einen Taktsignalgenerator zur Erzeugung eines rechteckiges Taktsignals, das über hochohmige Widerstände (nicht dargestellt) auf die Eingänge U und V gegeben wird. Ist die Drehstrom-Maschine 1 ordnungsgemäß angeschlossen und fehlerfrei, so reduziert die Niederohmigkeit der angeschlossenen Wicklungen der Drehstrom-Maschine 1 das Taktsignal derart, daß die Eingänge U und V diese Signale nicht auswerten können.

Im Falle eines Fehlers, etwa bei maschinenseitigem Drahtbruch, würden dagegen zwei redundante Kanäle des Stillstandswächters das Taktsignal als Drehfeldfrequenz erkennen und keine Freischaltung vorgenommen werden.

Jeder von zwei redundanten Kanälen des Stillstandswächters umfaßt folgende aufeinanderfolgende Stufen: Einen Nulldurchgangsdetektor 5' bzw. 5'', die jeweils mit den Eingängen U, V und W verbunden sind, eine Impulsformstufe 6', 6'', eine galvanische Trennstufe 7', 7'', einen Integrierer 8', 8'' und eine Komparator- und Relaisstufe 9', 9''.

Bei normalem Betrieb liegt die Drehstrom-Maschine 1 an Netzspannung. Über die erwähnten hochohmigen Widerstände liegt die Maschinenspannung an den Eingängen U, V, W und verhindert ein Freischalten durch Auswerten der Netzfrequenz. Wird die Drehstrom-Maschine 1 vom Netz getrennt, so liefert sie weiterhin aufgrund ihrer Schwungmassen und der darin gespeicherten kinetischen Energie eine generatorische Wechselspannung mit abnehmender Frequenz.

Diese Wechselspannung (wie vorher die Netzspannung) wird durch die Nulldurchgangsdetektoren 5' und 5'' in zur Drehzahl proportionale Rechtecksignale umgewandelt. In der Impulsformstufe 6'. 6'' werden die Ausgänge der Nulldurchgangsdetektoren 5', 5'' in Rechtecksignale konstanter Länge umgewandelt. Die Ausgänge der Impulsformstufen 6', 6'' werden in den galvanischen Trennstufen 7'. 7'', etwa Optokoppler, galvanisch von dem Potential an der Drehstrom-Maschine 1 getrennt.

Die beiden Impulsformstufen 6', 6'' sind zweckmäßigerweise komplementär zueiander ausgebildet, d.h. eine schaltet von Masse (OV) nach +Ub, die andere von -Ub nach Masse (OV) (±Ub ist die positive bzw. negative interne Versorgungsspannung vom Netzteil 4).

Auf diese Weise lassen sich die vom Netzteil 4 gelieferten Versorgungssspannungen mit überwachen, weil die galvanischen Trennstufen 7', 7'' im impulsfreien Zustand bestromt werden und bei Ausfall einer Versorgungsspannung keine Übertragung von Impulsen möglich ist.

Die von den Ausgängen der jeweiligen galvanischen Trennstufe 7' bzw. 7'' gelieferten Eingangsimpulse für die nachfolgenden Integrierer 8' und 8'' bewirken, daß letztere mit jedem Eingangsimpuls zurückgesetzt werden. Hierdurch können Komparatoren der nachfolgenden Komparator- und Relaisstufen 9', 9'' nicht schalten und damit keine Freigabe vornehmmen.

Die Integrierer 8'. 8'' sind ebenfalls zweckmäßigerweise komplementär aufgebaut, d.h. ein Integrierer arbeitet von Masse (OV) auf +Ub und der andere von +Ub auf Masse (OV). Zum Angleichen der Schwellen kann einer der beiden Integrierer 8', 8'' justierbar sein, so daß ein interner Abgleich vorgenommen werden kann.

Die Komparator- und Relaisstufen 9', 9'' besitzen gegeneinander verriegelte Freischalt-Relais 10', 10''. Deshalb können diese nur ein Freischalten bewirken, wenn synchrone Signale an beiden Freischalt-Relais 10', 10'' vorliegen. Diese kann eine laufende Drehstrom-Maschine 1 aber nicht liefern, da die von den Nulldurchgangsdetektoren 5', 5'' gelieferten Signale zwangsläufig um (etwa) 120° versetzt sind.

Kommt dagegen die Drehstrom-Maschine 1 zum Stillstand, erscheinen keine Eingangsimpulse an den Integrierern 8', 8'', diese laufen voll und die nachfolgenden Komparatoren der Komparator- und Relaisstufen 9', 9'' kippen um. Allerdings geschieht dies bezüglich der beiden Kanäle um (etwa) 120° phasenverzögert.

Eine Selbsttest-Baugruppe 11 überprüft die aufbereiteten, an den Freischalt-Relais 10', 10'' anstehenden Freischaltsignale bezüglich Asynchronität. Ist diese vorhanden (was durch die Phasenverschiebung der Freischaltsignale zwangsläufig auftritt), wird ein Transisitor der Selbstest-Baugruppe 11 durchgeschaltet, der bewirkt, daß das Relais 3 schaltet, so daß die Drehstrom-Maschine 1 von den Eingängen U, V getrennt wird. Dementsprechend werden dann die Taktsignale des Netzteils 4 den redundanten Kanälen zugeführt. Diese steuern aber die beiden Komparator- und Relaisstufen 9', 9'' synchron an, so daß diese synchron durchschalten, d.h. Freischaltsignale erzeugen und damit die Freigabeleitungen F1, ..., F4 freigeben können. Hierdurch wird der Stillstandswächter somit jeweils zusätzlich einem Selbsttest unterworfen.

Ergibt sich nämlich, daß das Taktsignal die beiden Kanäle nicht synchron durchläuft, d.h. liegt irgendein Fehler im Stillstandswächter vor, können die Freischalt-Relais 10', 10'' nicht freischalten.

Mit der Selbsttest-Baugruppe 11 ist eine Zählanordnung 12 verbunden, die durch das synchrone Auftreten der Freischaltsignale zurückgestellt wird, bei Auftreten asynchroner Signale jedoch jeweils inkrementiert wird und nach Erreichen einer vorbestimmten Zahl von asynchron durchlaufenen Stufen (beispielsweise zwei oder drei) ein Störsignal abgibt. Der Stillstandswächter geht hieraufhin auf Störung. Dieser Zustand läßt sich nur durch Ausschalten der Versorgungsspannung des Stillstandswächters löschen.

Die Selbsttest-Baugruppe 11 wird ferner zweckmäßigerweise für einen anfänglichen Selbsttest bei noch nicht eingeschalteter Drehstrom-Maschine 1 genutzt, zu welchem Zweck das Relais 3 die Eingänge U, V von der Drehstrom-Maschine 1 trennt und das Taktsignal an die Eingänge U, V gelegt wird. Bei funktionierendem Stillstandswächter erfolgt ein Freischalten durch die Freischalt-Relais 10', 10''.

Nach diesem Selbsttest erfolgt nach Einschalten der Drehstrom-Maschine 1 die eigentliche Auswertung der daran anliegenden Netzspannung bzw. beim Abschalten der davon erzeugten Spannung.

## Patentansprüche

1. Verfahren zum Überwachen einer vom Stromnetz getrennten, auslaufenden Drehstrom-Maschine (1), wobei die generatorische Spannung der Drehstrom-Maschine (1) einem Stillstandswächter zugeführt und bei Feststellen des Stillstands der Drehstrom-Maschine (1) eine Freischaltung von Freigabeleitungen (F1, ..., F4) für sicherheitsrelevante Geräte vorgenommen wird, dadurch **gekennzeichnet**, daß in zwei Kanälen jeweils eine Phase der generatorischen Spannung in bezug auf Nulldurchgänge überprüft und bei jedem Auftreten eines Nulldurchgangs ein Signal erzeugt wird, das nach galvanischer Entkopplung zum Steuern der Betätigung von gegeneinander verriegelten Freischalt-Relais der beiden Kanäle über diese freigebende Freischaltsignale verwendet wird.

2. Verfahren nach Anspruch 1, dadurch gekennzeichnet, daß das jeweilige galvanisch entkoppelte Signal einen Integrierer (8', 8'') des jeweiligen Kanals zurücksetzt, so daß ein nachgeschalteter Komparator nicht kippen kann, und bei Wegfall der Nulldurchgänge der Integrierer (8', 8'') volläuft, so daß der nachgeschaltete Komparator kippt.

3. Verfahren nach Anspruch 1 oder 2, dadurch gekennzeichnet, daß die Synchronisation der Freischaltsignale geprüft und bei Asynchronität die beiden Phasen vom Stillstandswächter getrennt werden, worauf in die beiden Kanäle ein Taktsignal synchron eingespeist wird, das nach fehlerfreiem Durchlaufen der beiden Kanäle ein synchrones Ansteuern der Freischalt-Relais durch Freischaltsignale bewirkt.

4. Verfahren nach einem der Ansprüche 1 bis 3, dadurch gekennzeichnet, daß ein Taktsignal erzeugt wird, das auf die hochohmig ausgebildeten Eingänge (U, V) des Stillstandswächters für die zu überprüfenden Phasen gegeben wird.

5. Verfahren nach einem der Ansprüche 1 bis 4, dadurch gekennzeichnet, daß die Kanäle durch Anlegen eines Taktsignals bei von der Drehstrom-Maschine (1) getrennten Eingängen (U, V) des Stillstandswächters für die zu überprüfenden Phasen überprüft werden.

6. Stillstandswächter zum Überwachen einer vom Stromnetz getrennten, auslaufenden Drehstrom-Maschine (1), mit einer Überwachungseinrichtung für die generatorische Spannung der Drehstrom-Maschine (1) und einer Einrichtung (10', 10'') zum Freischalten von Freigabeleitungen (F1, ..., F4) für sicherheitsrelevante Geräte, dadurch **gekennzeichnet**, daß in zwei parallelen Kanälen jeweils ein Nulldurchgangsdetektor (5', 5'') zum Erzeugen eines Ausgangssignals bei jedem Nulldurchgang der Spannung an der Drehstrom-Maschine (1) vorgesehen ist, wobei die Ausgangssignale über eine zugehörige galvanische Trennstufe (7', 7'') einer mit der Einrichtung (10', 10'') zum Freischalten gekoppelten Auswerteschaltung (8', 9'; 8'', 9'') zugeführt werden.

7. Stillstandswächter nach Anspruch 6, dadurch gekennzeichnet, daß die Auswerteschaltungen (8', 9'; 8'', 9'') jeweils einen Integrierer (8', 8'') und einen nachgeschalteten Komparator umfassen, wobei letztere jeweils ein Freischalt-Relais (10', 10'') ansteuern und die Freischalt-Relais (10', 10'') gegeneinander verriegelt sind.

8. Stillstandswächter nach Anspruch 6 oder 7, dadurch gekennzeichnet, daß die Ausgänge der Auswerteschaltungen (8', 9'; 8'', 9'') für deren Ausgangssignale mit einer Selbsttest-Baugruppe (11) zum Prüfen der Synchronisation zwischen den Ausgangssignalen verbunden ist, die ein bei Asynchronität betätigtes Relais (3) zum Trennen der Spannung der Drehstrom-Maschine (1) von Eingängen (U, V) des Stillstandswächters aufweist, wobei ein Taktsignalgenerator vorgesehen ist, dessen Taktsignal an die Eingänge (U, V) legbar ist.

9. Stillstandswächter nach Anspruch 8, dadurch gekennzeichnet, daß die Selbsttest-Baugruppe (11) mit einer Zählanordnung (12) verbunden ist, die bei Asynchronität einer vorbestimmten Anzahl von Durchläufen des Taktsignals durch beide Kanäle ein Störungssignal erzeugt.

10. Stillstandswächter nach einem der Ansprüche 6 bis 9, dadurch gekennzeichnet, daß zwischen den Nulldurchgangsdetektoren (5', 5'') und den galvanischen Trennstufen (7', 7'') eine Impulsformstufe (6', 6'') geschaltet ist.

11. Stillstandswächter nach Anspruch 10, dadurch gekennzeichnet, daß die Impulsformstufen (6', 6'') komplementär aufgebaut sind.

12. Stillstandswächter nach einem der Ansprüche 6 bis 11, dadurch gekennzeichnet, daß die galvanischen Trennstufen (7', 7'') Optokoppler sind.

13. Stillstandswächter nach Anspruch 12, dadurch gekennzeichnet, daß die Optokoppler im impulsfreien Zustand bestromt sind.

14. Stillstandswächter nach einem der Ansprüche 7 bis 13, dadurch gekennzeichnet, daß die Integrierer (8', 8'') komplementär aufgebaut sind.
